# EUROPEAN PATENT APPLICATION

(11) **EP 1 536 612 A1**
(43) Date of publication of application: **01.06.2005**
(21) Application number: 04256938.4
(22) Date of filing: 09.11.2004
(51) Int. Cl.: H04L 29/08

(54) **Method and apparatus for sharing applications using a peer-to-peer protocol**

(30) Priority: 27.11.2003 KR 2003084953
(71) Applicant: Samsung Electronics Co., Ltd., Suwon-si, Gyeonggi-do (KR)
(72) Inventor: Cho, Joon-ho, Yangcheon-gu Seoul (KR)
(74) Representative: Waddington, Richard

(57) **Abstract**

A method of sharing applications using a peer-to-peer protocol includes registering, by a first peer (10), applications (610) to be shared; determining whether the registered application files meet a search condition included in an application search instruction that is received from a second peer (20), and transmitting a description file to the second peer (20) in response to the determination results; making a connection to the second peer (20) through a predetermined protocol to perform a service pertaining to an application meeting the search condition; and executing a session for providing a remote display service pertaining to the application for the second peer (20), such that client peers can share idle resources in server peers, and can use applications that cannot be executed with their current resources or in their current environments.

## Description

The present invention relates to a method for sharing applications, and more particularly, to a method and apparatus for allowing respective peers to use applications installed on other peers causing no conflict in application license by using a P2P (Peer-to-Peer) scheme and to effectively use idle resources therebetween.

A client/server model is typical for data service over the Internet, by which data are generated by a few servers, and a number of clients access and use the servers. However, with the proliferation of Internet use and the anonymity guaranteed for Internet use, and with increasing demands from users to freely exchange and copy data, a variety of P2P based applications have been developed. Representative applications include file-sharing applications such as Gnutella and Napster. These file-sharing applications are composed of peers in which every one of the peers may be a server or may be a client in place of a specific server. Such peers refer to devices capable of joining a network implemented by a P2P protocol. Respective peers can operate independently and asynchronously, and are differentiated by peer IDs (peer identifications). In order for two peers to share services, they need not be directly connected but, in lieu thereof, can communicate with a desired peer or give and take services therebetween by using other intermediate peers as media for routing.

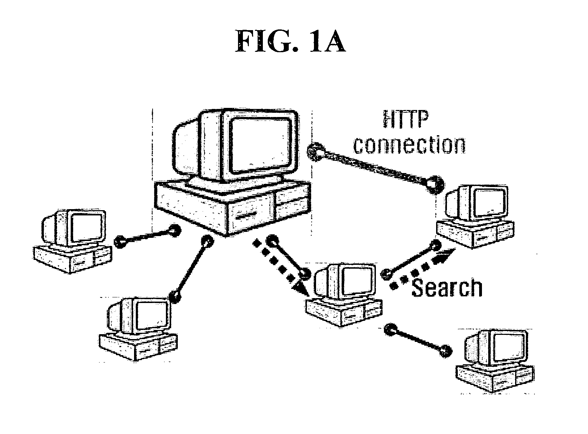

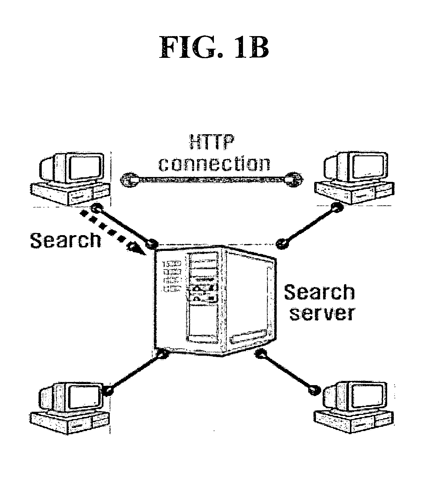

Gnutella is composed of a pure P2P model, as shown in FIG. 1A. Peers search for nodes in real time in order to discover data, and make a connection and exchange the data when discovering a node that holds data as a result of the search. For more detailed information on Gnutella, please refer to the website, "http://www.gnutella.com." In the case of Napster, peers still give and receive data independently as in FIG. 1B, but searching for these peers is performed through a separate search server.

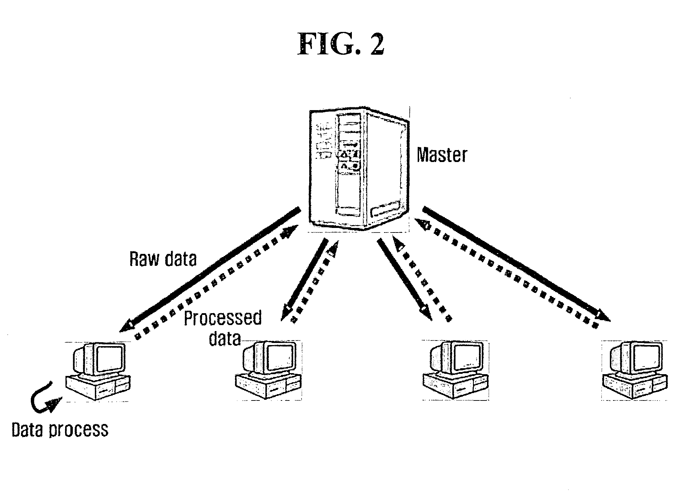

Besides sharing files, there also exist projects that share resources of computers such as "Grid computing" (see "http://www.ibm.com/grid") and "SETI@home" (see "http://setiathome.ssl.berkeley.edu"). However, these projects have an architecture in which resources are not shared between peers as in FIG. 1A or 1B. Instead, raw data, which is needed for a mathematical operation and the like and requiring a number of resources for processing the raw data, as shown in FIG. 2, are divided and allocated to the peers. The allocated data are then processed at the respective peers and the processed data are then combined back at a master.

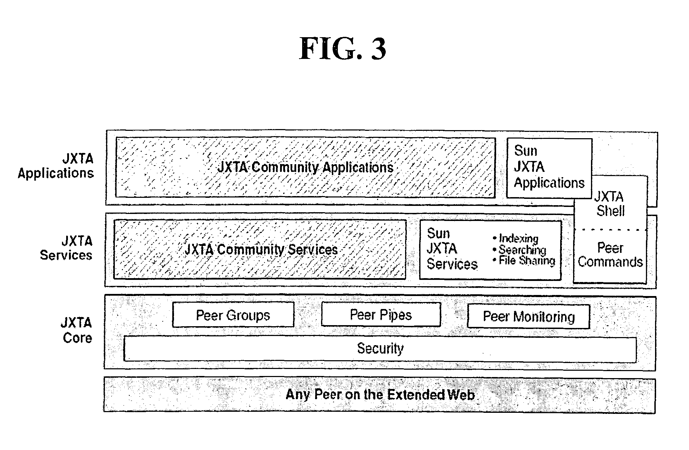

FIG. 3 illustrates software architecture of JXTA, which is a representative P2P protocol. By referring to the web page "http://www.jxta.org/," it is possible to obtain more detailed information about JXTA. JXTA is a general-purpose platform to execute P2P applications independent of their operating systems (OSs), networks and programming languages. Typical P2P file sharing systems, as well as JXTA, are based on the Internet of existing TCP/IP (Transmission Control Protocol/Internet Protocol) series, and a P2P protocol stack corresponding to a core is put thereon. Commonly, the P2P protocol stack roughly comprises a discovery portion for discovering and monitoring peers to form a group or a community among them, a query portion for finding desired services or data, and a connection portion for creating a connection to a peer that provides the services or data. On such a P2P protocol stack, an application such as a file sharing application operates using the stack.

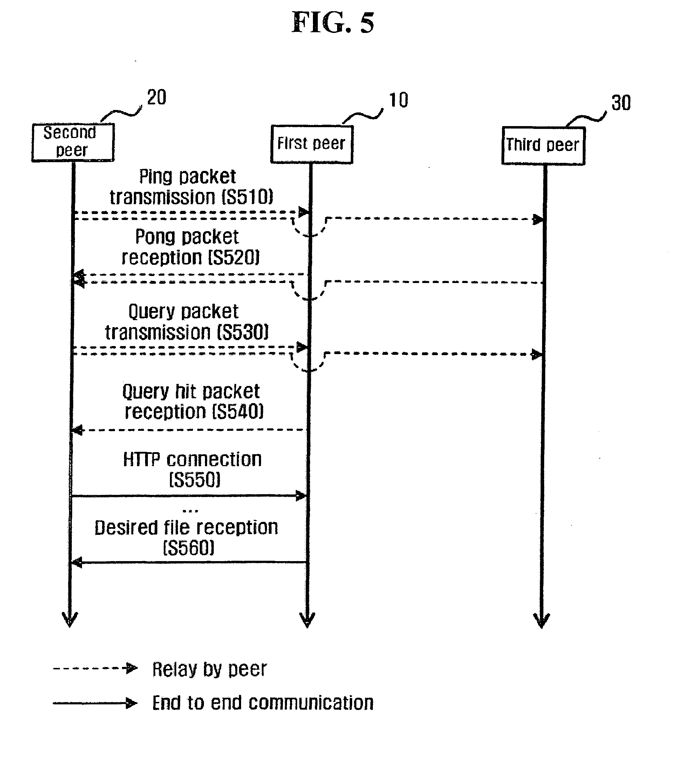

Such P2P sharing models are somewhat different in their operating manners. FIG. 5 illustrates an operating manner of the file sharing application, Gnutella, which is a commonly used P2P model application. Gnutella is a node-based system composed of a collection of pure peers as in FIG. 1A. The operation of the file sharing application, Gnutella, will be explained. A second peer 20 is newly joined to an existing network, to which a first peer 10 and a third peer 30 have been previously joined. At this time, if a "ping" packet, which is a packet for node discovery, is broadcast from the second peer 20 to discover what peers are present in the vicinity (S510), peripheral peers send a "pong" packet to the second peer 20 in response to the ping packet (S520). Through this process, the second peer 20 becomes aware that the first peer 10 and the third peer 30 exist in the vicinity. Then, if a "query" packet is broadcast from the second peer 20 to search for a desired file (S530), peers that have a file corresponding to the search condition among the peripheral peers will respond with a "query hit" packet (S540). Thereafter, the second peer 20 will select and create a connection to one of the peers responding with the query hit packet (S550), and receive the desired file in a GET or PUSH method (S560). Typically, a GET instruction is used upon receiving the file, but a method by which the second peer 20 having the file performs a PUSH is often used at a special condition, such as when the second peer 20 is present within a firewall. To operate it as one complete application, there is a need for association with components such as authentication, session, and user interface (GUI), in addition to the above-stated P2P protocol stack.

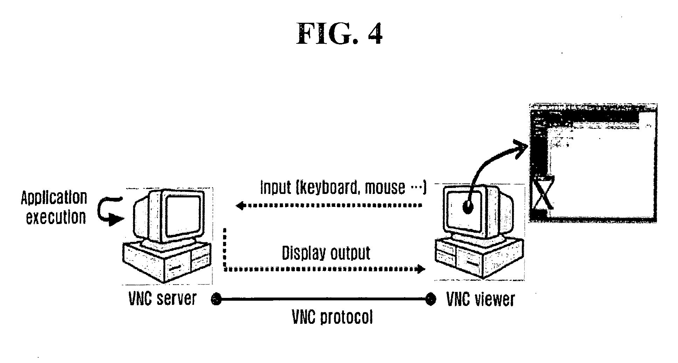

Besides the P2P model, a remote display system may be related to the present invention. Representative techniques of the system include "X window system", "VNC" (Virtual Network Computing) and the like. Detailed information on the X window system may be obtained from the web page "http://www.x.org," and detailed information on the VNC may be obtained from the web page "http://www.uk.research.att.com/vnc/." Such techniques use a scheme by which, if a remote viewer is connected to a server using an input device, such as a keyboard and a mouse, and forwards various instructions, the server executes applications in response to the instructions and then delivers back display information as a result of the execution to the remote viewer, as shown in FIG. 4. A client serving as a remote viewer does not download and execute programs of the server. Instead, all operation executions are performed at the server and the client only displays the results of the execution from the server. Therefore, it may be a so-called thin client.

VNC can be executed on most OSs. In other words, it satisfies interoperability between OSs. For example, a Linux system is connected to a Windows server to then execute a program on the Windows server, and an output display can be viewed on the Linux system. Likewise, the Windows system is connected to the Linux server to then execute a program on the Linux server, and an output display can be viewed on the Windows system. Further, a mobile device, such as a PDA (personal digital assistant), can execute a program in the server only if it has a viewer that follows the protocol of the server.

Explanation on an operation of VNC will be given with reference to FIG. 4. Operation of VNC employs a principle in which a server updates a frame buffer displayed on a server-side viewer. In this context, VNC is called a remote frame buffer (RFB). Information on displayed pixels at this time is transferred in various manners, as when video data are transferred, but adaptively to the current situation. Specifically, when a VNC viewer as the client forwards an instruction using an input device such as a keyboard and a mouse, the VNC server executes its embedded application in response to the instruction and delivers the result to the VNC viewer. Communication between the VNC viewer and VNC server through a VNC protocol varies in quality depending upon the situation of the network.

The P2P sharing model and the remote display system have the following problems and inconveniences. In the P2P scheme, a number of peers form a community and share information and resources among them, but most applications of conventional P2P schemes are focused only on sharing files. Accordingly, sharing information is confined to files such as music and moving pictures, for which it does not comply a demand to share an application itself. Although there are some applications for sharing resources, they do not employ the self-controlled sharing of pure peers such as file sharing, but instead are only used in a parallel computing manner, such as "Grid computing" or "SETI@home."

Meanwhile, the remote display system and the remote access system use a scheme by which a client connects to a known server to use the server as one user. This is merely to make a connection to the server and to download a file from the server, and for a plurality of clients to use programs in the server. Thus, since this is not a pure sharing among peers, it has the same problems as the client/server model. That is, the client is allowed to make a connection to a server of which the account the client holds, and an application that the client desires to use must exist in the server. Thus, only those applications that the client is authorized to use (i.e., whose application licenses authorize use) can be executed. In addition, there is a problem in that since connection by a number of clients is concentrated on a small number of servers; the servers require more and more powerful computing capability, while increasingly the computing capability of the clients is not used effectively.

Thus, conventional techniques may provide no method of allowing all clients in a community to share applications held by peers. Further, there is no method by which peers may provide their idle resources for other peers.

According to the present invention there is provided an apparatus and method as set forth in the appended claims. Preferred features of the invention will be apparent from the dependent claims, and the description which follows.

The present invention is conceived to solve the aforementioned problems, although embodiments of the present invention are not required to solve any of the aforementioned problems.

According to an aspect of the present invention there is provided a method of effectively sharing applications and resources among peers using a P2P scheme that attracts the public's attention under the Internet environment.

According to another aspect of the present invention applications of other platforms are allowed to be used without a separate installation procedure through application sharing.

According to another aspect of the present invention an application that cannot be performed under a current resource or environment is allowed to be used, by sharing idle resources in PCs.

According to another aspect of the present invention, there is provided a method of sharing applications using a P2P protocol, comprising a first step of registering, by a first peer having a server function, applications to be shared; a second step of determining whether the registered application files meets a search condition included in an application search instruction that is received from a second peer having a client function, and transmitting a description file to the second peer in response to the determination results; a third step of making a connection to the second peer through a predetermined protocol to perform a service pertaining to an application meeting the search condition; and a fourth step of executing a session for providing a remote display service pertaining to the application for the second peer.

According to another aspect of the present invention, there is provided a method of using shared applications using a P2P protocol, comprising a first step of inputting, by a user of a peer (a) having a client function, a search condition of a desired application; a second step of forming a search message using the search condition and then transmitting a search instruction to peripheral peers; a third step of receiving a description file pertaining to the application from a peer having a registered application meeting the search condition among the peripheral peers; a fourth step of making a connection to a peer (b) selected by the user of the peer (a) among peers having the registered applications through a predetermined protocol based on the description file; and a fifth step of executing a session in which a remote display service pertaining to the application is provided from the peer (b).

According to another aspect of the present invention, there is provided a server for sharing applications using a P2P protocol, comprising a registration module for registering applications to be shared according to user's input and setting service policies for all of the applications or individual applications; a resource monitoring module for measuring idle resources of the server and monitoring an amount of the resources used on average by the registered applications; a description module for producing a description file based on the registration module and the resource monitoring module, the description file containing information pertaining to applications that can be currently served and information pertaining to an environment that serves the applications; and a session module for maintaining or terminating a session for providing a client with a remote display service.

According to another aspect of the present invention, there is provided a client for using a shared application using a P2P protocol, comprising a search module for receiving a search condition for a desired application from a user of a client to formulate a search message for discovering an application that meets the search condition, and sending the formulated message to peripheral peers; and a session module for maintaining or terminating a session in which a remote display service pertaining to the application is provided from a server having a registered application that meets the search condition among the peripheral peers.

For a better understanding of the invention, and to show how embodiments of the same may be carried into effect, reference will now be made, by way of example, to the accompanying diagrammatic drawings in which:
FIG. 1A illustrates a configuration of a pure type of conventional P2P file sharing systems;
FIG. 1B illustrates a configuration of a hybrid type of conventional P2P file sharing systems;
FIG. 2 illustrates a configuration of conventional "Grid computing" and "SETI@home" systems;
FIG. 3 is a block diagram illustrating an architecture of conventional JXTA software;
FIG. 4 illustrates an operational configuration of conventional Virtual Network Computing;
FIG. 5 is a flow diagram illustrating an operational process of a conventional "Gnutella" protocol;
FIG. 6 illustrates a configuration of a server in a P2P sharing system according to an exemplary embodiment of the present invention;
FIG. 7 illustrates a configuration of a client in a P2P sharing system according to another exemplary embodiment of the present invention;
FIG. 8 is a flow diagram illustrating an operation of a method according to a further exemplary embodiment of the present invention; and
FIG. 9 is a flow diagram illustrating termination by a server in the session execution process of FIG. 8 according to a still further exemplary embodiment of the present invention.

Hereinafter, exemplary embodiments of the present invention will be described in detail with reference to the accompanying drawings. Advantages and features of the present invention and a method of achieving the advantages and the features will be apparent by referring to exemplary embodiments to be described later in detail in connection with the accompanying drawings. However, the present invention is not limited to the exemplary embodiments to be disclosed below and may be implemented in various different forms. The exemplary embodiments are provided only for completing disclosure of the present invention and for fully representing the scope of the present invention to those skilled in the art, and the present invention is defined only by the appended claims. Like reference numerals designate like elements throughout the detailed description.

In an application sharing system proposed by the present invention, a specific server or a client does not exist separately but one peer may serve as a client to use applications in other peers and may serve as a server for supplying its own applications and resources to other peers. Accordingly, the server and client parts operate in one program. However, all peers are not necessarily equipped with a server function and a client function simultaneously, and a peer that operates only as a server and a peer that operates only as a client may be included in the system. Thus, it is necessary to divide components into sever-side and client-side components in view of their functions. The present invention employs a conventional P2P protocol stack for community formation between peers and for a search protocol for a desired application, and employs a server/viewer architecture of a conventional remote display system for remote application performance and control.

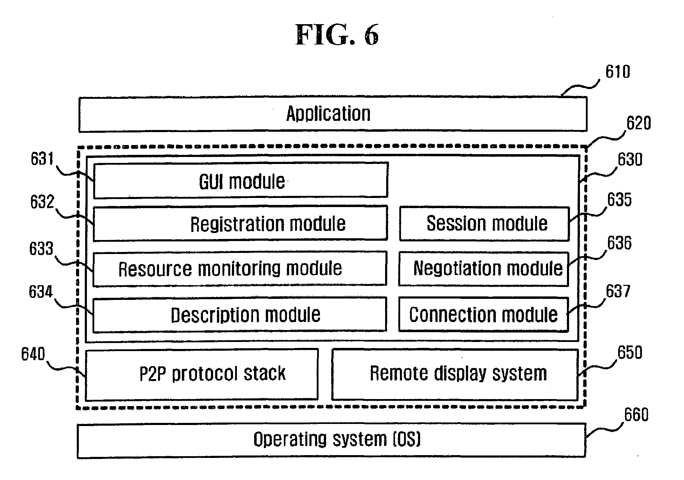

FIG. 6 illustrates a server-side configuration of an application sharing system according to one exemplary embodiment of the present invention. The server registers applications to be shared among peers and monitors currently available system resources while the computer is connected to a P2P network. The server also formulates a description pertaining to the server itself based on the currently registered applications and the monitored system resources, and responds to a search message coming from other peers based on this description. While the formed P2P community is kept, the server part operates in a daemon form and stands by for a search or application utilization request from other peers. When an application utilization request comes from other peers, a connection is made and proper negotiation occurs. Thereafter, a session in which a server provides a peer acting as a client with a remote display service begins. If the session begins, then the remote display system is driven so that an associated application can be controlled by another remote peer.

A configuration of a server-side peer will be specifically explained. An operating system (OS) 660 for driving a system is present at the lowest level and an application 610, which a user desires to use, is present at the highest level. Middle ware 620 for sharing computer resources in the P2P scheme according to the present invention is present between the operating system 660 and the application 610. Further, in the middle ware 620, there exist a P2P protocol stack 640 for discovering a number of peers to form a community of peers and allowing data transmission and reception between the peers, a remote display system 650 for executing an application according to an instruction delivered from a remote viewer and delivering a result of the execution to the remote viewer, and an application sharing system module 630 on a higher layer added in the present invention.

The application sharing system module 630 includes a number of lower modules, as explained below. Since all applications in the computer are not necessarily shared with other peers, a user should directly register the applications to be shared. At this time, the user can set service policies to the applications as registered. If the state of the system does not meet the criteria set herein, a service of the associated application is forced to be stopped. An example of such a service policy is that "when CPU utilization amount becomes 50% or more on average during the most recent ten minutes, the service of the associated application cannot be performed." As stated above, the registration module 632 is responsible for registering applications to be shared depending on input from a user, and for setting service policies of all or individual applications depending on input from the user or a resource statistical value observed by the resource monitoring module 633.

Determination as to whether a peer, serving as a server, can accept an application utilization request from a client or whether the peer continues to maintain an application that is currently being served, is affected by both the current resource state of the server and policies in the registration process. That is, if the resources of the server are being used in excess of the set criteria, requests from the clients are rejected or blocked since the service is unavailable in the current state. In addition, it is also necessary to newly form the description file that has influence on searches by other peers. Accordingly, the resource monitoring module 633 measures idle resources of the computer every time and manages statistics for resources during a recent given period of time. Similarly, it also manages how many resources a specific application uses on average, namely, a past statistical value. Resources to be monitored by the resource monitoring module 633 include items such as a CPU, a memory and network bandwidth, which are needed in executing programs.

A description module 634 serves to produce a description file containing information on applications that can be presently served and information on the service environment, based on the registration module 632 and the resource monitoring module 633. Specifically, the description file contains names, versions and any other information of served applications; an operating system, a memory, a CPU and a virtual memory of the server; resource information that can be provided with respect to current associated applications; and the like. The description file is formulated with respect to respective applications. The description file is dynamically produced by reflecting system information that is changed periodically or upon a search request from other peers. The produced description file is used to formulate a message responsive to search requests from other peers. The description file may also be used for advertisement, depending on a lower P2P stack.

Meanwhile, a connection module 637 serves to interconnect a server and a client through a predetermined protocol (e.g., a HTTP protocol) so that they communicate with each other to provide a service of the server to the client.

Also, a negotiation module 636 is an optional component and serves to negotiate with clients for several service related matters such as data transmission quality (e.g., Quality of Service, QoS) or service policy.

A session module 635 serves to maintain a session that provides the client with a remote display service. The session is needed to collectively maintain and manage related processes. One session includes client-side information, quality information such as QoS, secure process termination, associated service policy, log information, and the like. In the end, the session module 635 serves to maintain such a session for each service of applications as provided and to close the session along with the service termination.

A GUI (graphic user interface module) module 631 provides a graphic interface for allowing a server user to input instructions, and receives instructions input from the server user. That is, the GUI module 631 takes part in the registration process, environment setup for application sharing, the monitoring of system resources, server-side controls of connection setup and disconnection, and the like.

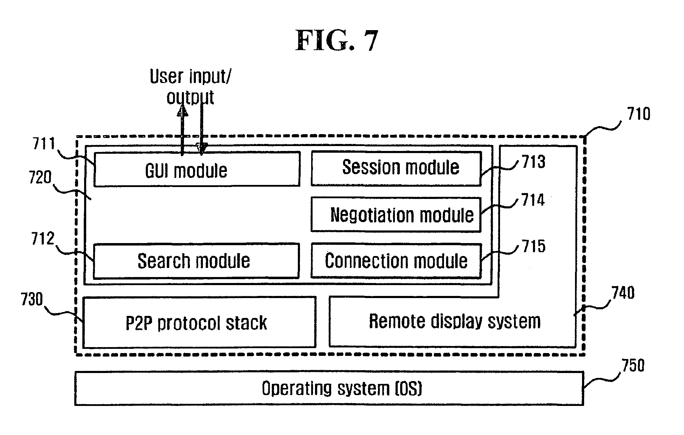

FIG. 7 illustrates a client-side configuration of an application sharing system according to an exemplary embodiment of the present invention. The client completes a search condition depending on a request from a user and discovers an application in a peer corresponding to the search condition. It also makes a connection through negotiation with a peer selected by the user among the searched peers and maintains the session for smooth performance of the application. If the session is initiated, the user can perform the application in a correspondent peer through the viewer of the remote display system.

A configuration of the client-side peer will be specifically described. An operating system (OS) 750 for driving a system is present at the lowest level and a middleware 710 for sharing computer resources in the P2P scheme according to the present invention is present thereon. And, in the middleware 710, there exist a P2P protocol stack 730, a remote display system 740, and an application sharing system module 720 which is added on a higher layer in the present invention, as in the middle ware 620 at the server. The application sharing system module 720 includes a number of lower modules, which will be explained below.

The search module 712 serves to receive search conditions for a desired application from a user via the GUI module 631 after a client operation, formulates a search message to discover a service that meets the search condition, and sends the formulated message to other peers via a lower P2P stack.

A connection module 715 serves to interconnect a server and a client through a predetermined protocol so that they communicate with each other to allow the client to be provided with a service of the server, using the connection module 637 at the server.

The negotiation module 714 serves to negotiate with the server for service related matters such as data transmission quality or service policy, via the negotiation module 636 at the server.

The session module 713 serves to maintain a session to be provided with a remote display service from the server. One session includes server-side information, quality information such as QoS, secure process ending, associated service policies, logs, and the like. The session module 713 maintains such a session for each service of the applications as provided and closes the session along with the service ending.

A GUI (graphic user interface) module 711 provides a graphic interface to allow a client user to input instructions and is input with instructions from the server user. Thus, the GUI module 711 at the client includes a portion for showing a search result for peripheral nodes and a search result for a service requested by the user, and a portion for the user inputting an option for searching for a desired application. In addition, the GUI module 711 may include a portion for showing a situation of the server or information pertaining to a network. Further, the GUI module 711 performs a role for being delivered with the application performance result from the server, namely, a remote display service via the remote display system 740, and displaying that result to the client user.

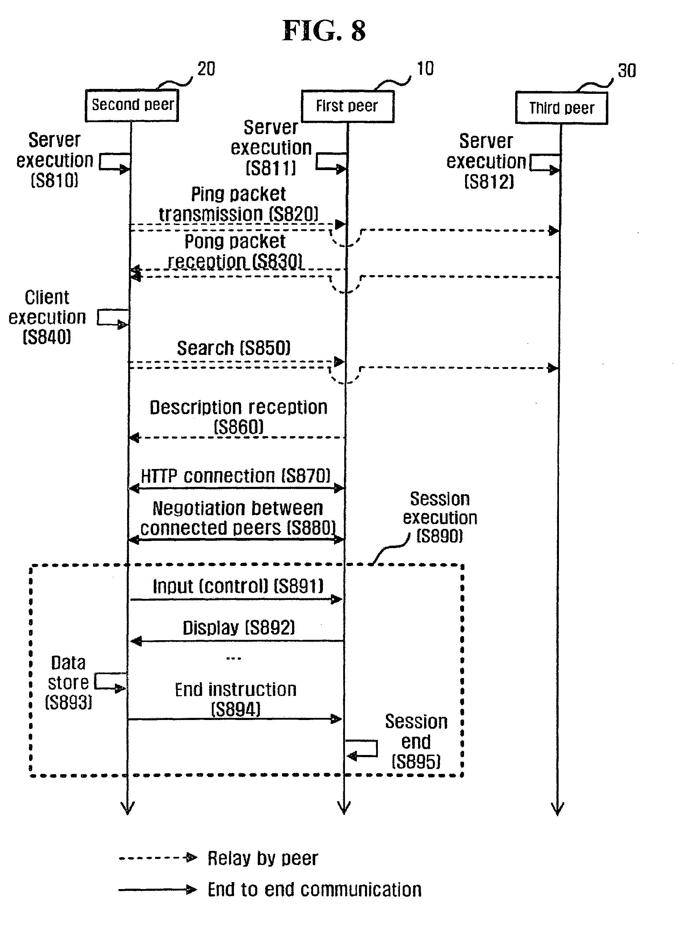

FIG. 8 is a flow diagram entirely illustrating an operation according to one exemplary embodiment of the present invention.

First, the peers 10, 20 and 30, each having a server function, register applications that each of the peers desires to share (S810, S811 and S812). In the registration process, they also register together various policies that become service criteria upon serving the application, as well as an execution instruction of the application.

Next, if a second peer 20 which is one of the peers 10, 20 and 30 broadcasts a ping packet to recognize what peers, if any, exist in the vicinity (S820), the peripheral peers 10 and 30 send a pong packet to the second peer 20 in response to the ping packet (S830). With this pong packet, the second peer 20 will recognize that the first peer 10 and the third peer 30 exist in the vicinity.

Next, a client-side (i.e., the second peer) module is executed by a request from a user (S840). The user inputs a search condition of a desired application via the GUI module 711 when it desires to utilize applications of other peers. Then, the search module 712 of the client constructs a search message using the search condition input from the user and, thereafter, sends a search instruction via the connection module 715 to the peripheral peers 10 and 30 making up a community (S850). The peripheral peers 10 and 30, receiving the search instruction, provide a response if the search condition is met or do not provide the response otherwise, by referring to their respective description files. If the first peer 10 has a registered application meeting the search condition, it transmits a description file for the application to the second peer 20 and the second peer 20 receives it (S860).

Now, a connection is made between the second peer 20 and the first peer 10 in order to perform application services (S870). This example has been described, with one peer transmitting a description file as a response. However, if there are several peers that transmit the description file, the second peer 20 makes, through a predetermined protocol, a connection with a peer selected by a user of the second peer 20 among peers having the registered application, based on the description file.

Following the connection process, negotiation between the second peer 20 and the first peer 10 for a service begins (S880), and when the negotiation process is ended, a session for the first peer 10 providing the second peer 20 with the remote display service is initiated and the application is performed (S890).

The process of executing the session (S890) is performed using a conventional remote display system. First, if a user's input, namely, a control is sent from the second peer 20 as a client to the first peer 10 as a server (S891), an output value of the application as well as display information is sent from the first peer 10 to the second peer 20 (S892). The processes such as S891 and S892 are repeated several times according to a request from the second peer 20 as the client. Thereafter, if the application utilization in the second peer 20 is ended, a file and any other log information generated as a result of the application execution are stored in a local computer (S893) and an end instruction is sent to the first peer 10 (S894). Thereafter, the first peer 10, receiving the end instruction, terminates the session and completes a normal performance process (S895).

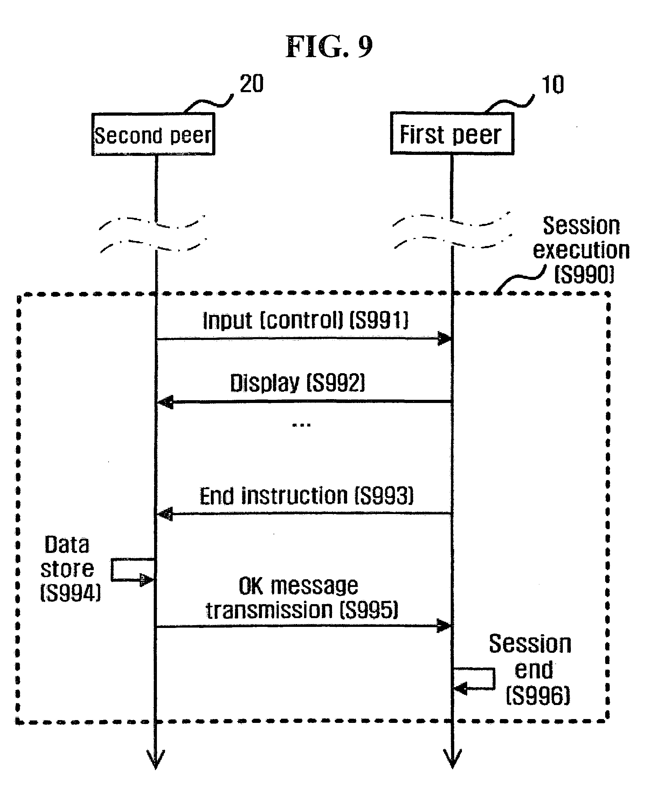

FIG. 9 is a flow diagram illustrating a process in which a session is ended by the server after having been executed in FIG. 8. If, after the negotiation between the connected peers as in FIG. 8 is ended (880), the entire process is ended due to service discontinuation in the server, rather than after the client has terminated the service utilization, a process (S990) somewhat different from the typical process follows.

That is, when the service is stopped by the user of the first peer 10 as the server while the user's input transmission process (S991) and a display process (S992) are repeated, the first peer 10 sends an end instruction indicating the service discontinuation to a served client-side peer, namely, the second peer 20 (S993). Then, after the second peer 20, receiving the message, stores the data file and the log in the local computer (S994) and safely stops the application utilization, the second peer 20 sends to the first peer 10 an OK message indicating normal termination (S995). The first peer 10 recognizes that the operation in the second peer 20 is ended in safety after confirming the OK message, and terminates the session (S996).

According to the present invention that uses application sharing of the P2P sharing scheme, the following exemplary advantages may be obtained. First, it is possible to share applications without causing conflicts in an application license. Sharing applications between peers is different from the unauthorized copying and distribution of the applications. The applications can be executed on authorized computers and are not copied into other unauthorized computers. It is likewise for a remote connection by other anonymous users. For example, even users having no game license can play a game on another user's computer and perform remote control while viewing the display.

Second, it is possible to utilize an application without an installation procedure. In spite of a program that is not frequently used, a long-time installation procedure has been required for infrequent utilization and also a deletion procedure has been needed when the program becomes unnecessary. However, such an application used only once or twice can be executed on another peer's computer without going through the installation and deletion procedures.

Third, even clients having other operating systems or other kinds of platforms can utilize desired applications. For example, Linux applications can be executed in Windows and also typical PC applications can be executed on a PDA.

Fourth, since client peers can share idle resources in server peers, they can use applications that cannot be executed with their current resources or in their current environments. For example, by executing applications such as 3D simulations or CADs, requiring computer resources of high-level specifications at an idle time of a PC where such applications have been installed, even a user having a PC that cannot execute the associated applications directly can use the applications.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of sharing applications using a peer-to-peer protocol, comprising:
registering, by a first peer (10) having a server function, one or more applications (610) to be shared;
determining whether each of the applications (610) meet a search condition included in an application search instruction that is received from a second peer (20) having a client function, and transmitting a description file to the second peer (20) in response to a result of the determination;
establishing a connection between the first peer (10) and the second peer (20) through a predetermined protocol to perform a remote display service pertaining to an application (610) meeting the search condition; and
executing a session for providing the remote display service pertaining to the application for the second peer (20).

2. The method as claimed in claim 1, wherein registering the applications (610) to be shared comprises registering execution instructions of the applications (610) to be shared and policies that become criteria upon serving the applications.

3. The method as claimed in claim 2, wherein the policies are set based upon a statistical value of a monitored resource of the first peer (10).

4. The method as claimed in any preceding claim, further comprising, after establishing the connection, negotiating between the first peer (10) and the second peer (20) for details of the remote display service.

5. The method as claimed in any preceding claim, wherein executing the session comprises:
transmitting an output obtained by executing the application (610) to the second peer (20) using the remote display service by the first peer (10), if the second peer (20) sends a user's input for executing the application (610) to the first peer (10); and
terminating the session in response to an instruction from the first peer (10) or an instruction from the second peer (20).

6. The method as claimed in claim 5, wherein when the session is terminated in response to the instruction from the first peer (10), the terminating of the session comprises:
transmitting an end instruction indicating service discontinuation from the first peer (10) to the second peer (20);
receiving a message at the first peer (10) indicating normal termination by the second peer (20); and
confirming the received message and terminating the session.

7. A method of using shared applications (610) using a peer-to-peer protocol, comprising:
inputting, by a user of a first peer (10) having a client function, a search condition of a desired application;
constructing a search message using the search condition and then transmitting a search instruction to one or more peripheral peers (20,30);
receiving a description file pertaining to the application from one or more of the peripheral peers (20,30) having a registered application (610) meeting the search condition;
making a connection to a second peer (20), selected by the user of the first peer (10) from among the peripheral peers (20,30) having the registered applications (610), through a predetermined protocol based on the description file; and
executing a session in which a remote display service pertaining to the application is provided from the second peer (20).

8. The method as claimed in claim 7, further comprising, after making the connection to the second peer (20), negotiating with the second peer (20) for details of the remote display service.

9. The method as claimed in claim 7 or claim 8, wherein making the connection to the second peer (20) comprises:
transmitting a user's input for executing the application (610) to the second peer (20) and receiving an output, obtained by executing the application (610) from the second peer (20) using the remote display system, by the first peer (10); and
terminating the session in response to an instruction from the first peer (10) or an instruction from the second peer (20).

10. The method as claimed in claim 9, wherein when the session is terminated in response to the instruction from the first peer (10), terminating the session comprises:
storing a file including an output result obtained by executing the application (610); and
transmitting an instruction to request termination of the session to the second peer (20).

11. The method as claimed in claim 9, wherein, when the session is terminated in response to the instruction from the second peer (20), terminating the session comprises:
receiving an end instruction indicating service discontinuation from the second peer (20);
storing a file including an output result obtained by executing the application (610); and
transmitting, by the first peer (10), a message indicating normal termination to the second peer (20).

12. A server for sharing applications using a peer-to-peer protocol, comprising:
a registration module (632) for registering one or more applications (610) to be shared according to a user's input and setting service policies for all of the applications (610) as a group or individual applications (610);
a resource monitoring module (633) for measuring idle resources of the server and monitoring an amount of the resources used on average by the registered applications (610);
a description module (634) for producing a description file based on the registration module (632) and the resource monitoring module (633), the description file containing information pertaining to the applications (610) that can be currently served and information pertaining to an environment that serves the applications (610); and
a session module (635) for maintaining or terminating a session for providing a client with a remote display service.

13. The server as claimed in claim 12, further comprising:
a graphic user interface module (631) for providing a graphic interface to allow a server user to input instructions and for receiving instructions input from the server user; and
a connection module (637) for establishing a connection from the server to the client to allow communication with the client through a predetermined protocol in order to provide the remote display service for the client.

14. The server as claimed in claim 12 or claim 13, further comprising a negotiation module (636) responsible for negotiating with the client for one or more of data transmission quality, service policies, and other service related matters.

15. A client for using a shared application using a peer-to-peer protocol, comprising:
a search module (712) for receiving a search condition for a desired application (610) from a user of the client to formulate a search message to discover an application (610) that meets the search condition, and sending the formulated message to one or more peripheral peers (10, 20, 30); and
a session module (713) for maintaining or terminating a session in which a remote display service pertaining to the application (610) is provided from a server having a registered application (610) that meets the search condition among the peripheral peers (10, 20, 30).

16. The client as claimed in claim 15, further comprising:
a connection module (715) for allowing the server and the client to communicate with each other through a predetermined protocol to provide the client with the remote display service from the server; and
a graphic user interface module (711) for providing a graphic interface by which the user inputs instructions, and for receiving the remote display service from the server to display an executing result of the application (610) to the user.

17. The client as claimed in claim 15 or claim 16, further comprising a negotiation module (714) responsible for negotiating one or more of data transmission qualities, service policies, any other service related matters with the server.

18. A computer readable medium including program codes executable by a computer to perform a method of sharing applications using a peer-to-peer protocol, comprising:
registering, by a first peer (10) having a server function, one or more applications (610) to be shared;
determining whether each of the registered applications (610) meets a search condition included in an application search instruction that is received from a second peer (20) having a client function, and transmitting a description file to the second peer (20) in response to a result of the determination;
establishing a connection between the first peer (10) and the second peer (20) through a predetermined protocol to perform a remote display service pertaining to an application (610) meeting the search condition; and
executing a session for providing the remote display service pertaining to the application for the second peer (20).
